(19) Europäisches Patentamt
European Patent Office
Office européen des brevets

(11) **EP 3 667 456 A2**

(12) # EUROPEAN PATENT APPLICATION

(43) Date of publication:
**17.06.2020 Bulletin 2020/25**

(51) Int Cl.:
**G06F 1/3231** (2019.01)  **B66B 3/00** (2006.01)
**G06F 3/01** (2006.01)

(21) Application number: **19204793.4**

(22) Date of filing: **23.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.10.2018 US 201816171396**

(71) Applicant: **Otis Elevator Company**
**Farmington, Connecticut 06032 (US)**

(72) Inventor: **HSU, Arthur**
**Manchester, CT 06040 (US)**

(74) Representative: **Dehns**
**St. Bride's House**
**10 Salisbury Square**
**London EC4Y 8JD (GB)**

(54) **PRIORITY-BASED ADJUSTMENT TO DISPLAY CONTENT**

(57) According to an aspect, a method of priority-based adjustment to display content is provided. The method includes determining a position of a first observer (102A) relative to a display device (104) and determining a position of a second observer (102B) relative to the display device (104). A first content screen associated with the first observer (102A) is displayed on the display device (104) based on determining that the first observer (102A) has a greater display priority than the second observer (102B) based at least in part on the position of the first observer (102A) and the position of the second observer (102B). A second content screen associated with the second observer (102B) is displayed on the display device (104) based on determining that the second observer (102B) has a greater display priority than the first observer (102A) based at least in part on the position of the first observer and the position of the second observer (102B).

FIG. 1

EP 3 667 456 A2

**Description**

BACKGROUND

The subject matter disclosed herein generally relates to the field of displays, and more particularly to priority-based adjustments to display content.

Display content can include text and graphics, for instance, to give wayfinding guidance to a person, where it is assumed that the person is directly facing a display device rather than viewing from an oblique angle. However, in the context of a shared public display device, users often do not stop in front of a stationary monitor but prefer to continue walking to avoid disrupting the flow of people following or to reduce the time wasted in stopping and re-starting. As one user transitions away from the display device, another user may attempt to access the display device while content associated with the previous user is still being displayed. Thus, the later user may have to wait for a timeout period to elapse or manually request to return to an input screen as displayed content, which results in an extended interaction period.

BRIEF SUMMARY

According to one embodiment, a method of priority-based adjustment to display content is provided. The method includes determining a position of a first observer relative to a display device and determining a position of a second observer relative to the display device. The method also includes displaying, on the display device, a first content screen associated with the first observer based on determining that the first observer has a greater display priority than the second observer based at least in part on the position of the first observer and the position of the second observer. The method further includes displaying, on the display device, a second content screen associated with the second observer based on determining that the second observer has a greater display priority than the first observer based at least in part on the position of the first observer and the position of the second observer.

In addition to one or more of the features described above or below, or as an alternative, further embodiments may include where the first content screen includes a first elevator car assignment for the first observer and the second content screen includes a second elevator car assignment for the second observer.

In addition to one or more of the features described above or below, or as an alternative, further embodiments may include switching display content of the display device to a user input screen based on detecting a transition between the first observer having the greater display priority than the second observer.

In addition to one or more of the features described above or below, or as an alternative, further embodiments may include switching display content of the display device to a user input screen based on reaching a timeout period after displaying the first content screen or the second content screen.

In addition to one or more of the features described above or below, or as an alternative, further embodiments may include switching the display device to a screen saver mode based on detecting no observers within a threshold distance of display device for a screen saver timeout period.

In addition to one or more of the features described above or below, or as an alternative, further embodiments may include tracking a position of an observer who most recently interacted with the display device as a most recent observer, determining a distortion correction to apply based on the position of the most recent observer relative to the display device, and outputting the distortion correction to the display device.

In addition to one or more of the features described above or below, or as an alternative, further embodiments may include where the greater display priority is determined based on one or more of: a distance relative to the display device, an orientation relative to the display device, a change in position relative to the display device, and a gaze relative to the display device.

In addition to one or more of the features described above or below, or as an alternative, further embodiments may include adjusting the distortion correction as the most recent observer continues to change position relative to the display device, where the distortion correction includes at least a rotation and rescaling operation.

In addition to one or more of the features described above or below, or as an alternative, further embodiments may include determining the position of the most recent observer relative to the display device based on one or more angular differences between the most recent observer and the display device.

In addition to one or more of the features described above or below, or as an alternative, further embodiments may include where the position is determined based on one or more of: a depth sensor, a radar sensor, an ultrasonic sensor, a multi-camera system, an infrared sensor, and one or more floor pressure sensors.

In addition to one or more of the features described above or below, or as an alternative, further embodiments may include distinguishing the first observer from the second observer based on one or more of: a mobile credential, an observed physical characteristic, and facial recognition.

According to another embodiment, a system is provided. The system includes a display device, one or more sensors operable to detect a position of an observer, and a display adjustment system operably coupled to the display device and the one or more sensors. The display adjustment system configured to perform a plurality of operations including determining a position of a first observer relative to the display device, and determining a position of a second observer relative to the display device. The display adjustment system configured to display, on the display device, a first content screen associated with the first observer based on determining that the first observer has a greater display priority than the second observer based at least in part on the position of the first observer and the position of the second observer. The display adjustment system is also configured to display, on the display device, a second content screen associated with the second observer based on determining that the second observer has a greater display priority than the first observer based at least in part on the position of the first observer and the position of the second observer.

Technical effects of embodiments of the present disclosure include applying priority-based adjustments to display content on a display device to account for transitioning between observers of the display content.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

BRIEF DESCRIPTION

The following descriptions should not be considered limiting in any way. With reference to the accompanying drawings, like elements are numbered alike:

FIG. 1 illustrates a general schematic system diagram of a display system, in accordance with an embodiment of the disclosure;

FIG. 2 illustrates a general schematic system diagram of a display system, in accordance with an embodiment of the disclosure;

FIG. 3 illustrates a general schematic system diagram of a display system transitioning between states, in accordance with an embodiment of the disclosure;

FIG. 4 illustrates an observer relative to a display device establishing a first observation angle, in accordance with an embodiment of the disclosure;

FIG. 5 illustrates an observer relative to a display device establishing a second observation angle, in accordance with an embodiment of the disclosure; and

FIG. 6 is a flow diagram illustrating a method, according to an embodiment of the present disclosure.

DETAILED DESCRIPTION

A detailed description of one or more embodiments of the disclosed apparatus and method are presented herein by way of exemplification and not limitation with reference to the Figures.

As will be described below, embodiments adjust display content, such as text and graphics, with respect to an observer as the observer changes positions relative to a display device. A display adjustment system can track the position of multiple observers relative to the display device to determine which of the observers has a greater display priority. For example, once a first observer interacts with the display device, a first content screen associated with the first observer can be displayed, such as an elevator car assignment. The first observer may also be the closest observer with the shortest distance to the display device. The first content screen can remain displayed on the display device for a timeout period or until a second observer approaches the display device and has a shorter distance to the display device than the first observer, as one example of a greater display priority. In some embodiments, display priority may be based on an orientation relative to the display device, a change in position relative to the display device, and/or a gaze relative to the display device to determine which observers are actively approaching and/or viewing the display device. The display device can switch display content to a user input screen based on detecting a transition between the first observer having the greater display priority than the second observer. The second observer can then make a selection from the user input screen, resulting in displaying a second content screen associated with the second observer. Thus, the second observer does not have to wait for a full timeout period to elapse or to physically press any buttons to switch the display device from displaying the first content screen to displaying the user input screen on the display device. Alternatively, where the observers are identifiable and preferences of the observers are known, the display device can switch directly between observer-specific content without requiring direct user input.

Further, in the context of wayfinding guidance displays that may display directional arrows and navigation information, observers often do not intend to stop in front of a display device but continue looking at the display device while passing by the display device. As an observer moves relative to a display device in a fixed position, the observer may have a difficult time understanding the content, as information or directional arrows can appear distorted due to the changing perspective of the observer. Embodiments use one or more sensors to track the position (e.g., location and/or orientation) and trajectory of an observer of the display device, which may include tracking a portion of the observer, such as the head or gaze of the observer. By determining a position of an observer relative to the display device and a trajectory of the observer relative to the display device, a distortion correction can be applied to display content to correct the display content with respect to the observer while having the greater/greatest display priority.

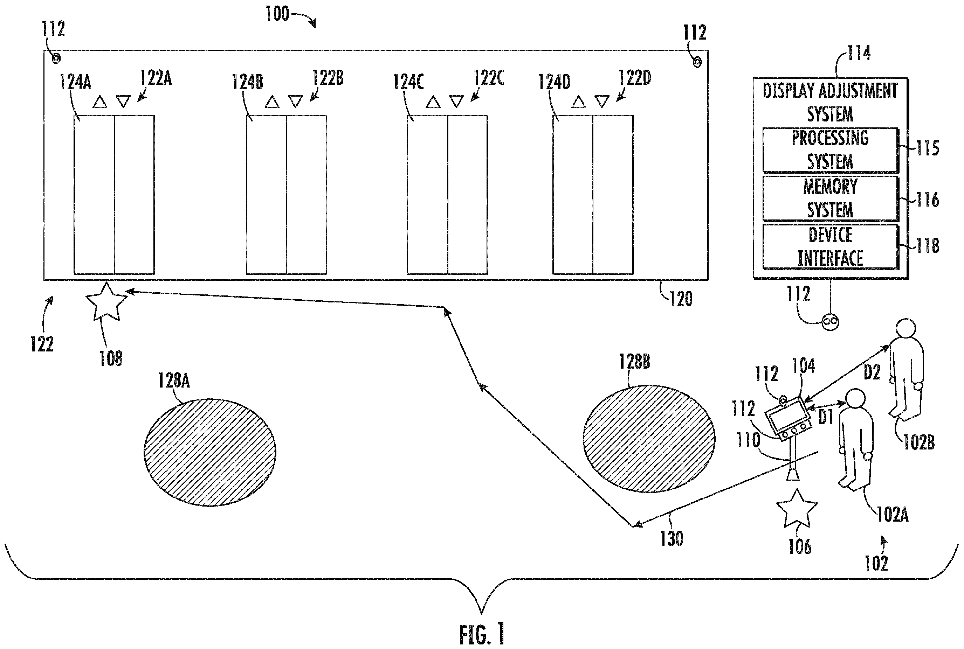

With reference to FIG. 1, a system 100 for priority-based adjustment to display content is illustrated, in accordance with an embodiment of the present disclosure. As seen in FIG. 1, an observer 102A can view a display device 104 (e.g., a computer monitor) while transitioning between a location 106 proximate to the display device 104 and a desired end-point location 108. The display device 104 can be a kiosk 110 in a substantially fixed position that is viewable by a first observer 102A while transitioning across the location 106. In some embodiments, display content to be displayed on the display device 104 includes directions in text and/or graphic form to assist the first observer 102A in navigating through a building. One or more sensors 112 can be used to determine a position of the first observer 102A, where the position includes a location and/or orientation of the first observer 102A relative to the display device 104. The one or more sensors 112 can also determine a position of one or more other observers, such as a second observer 102B. For instance, the one or more sensors 112 can include one or more of: a depth sensor, a radar sensor, an ultrasonic sensor, a multi-camera system (e.g., a stereoscopic camera system), an infrared sensor, floor pressure sensors, and the like, configured to capture at least one feature of the first observer 102A and/or second observer 102B, such as a head shot and/or body shot of the first observer 102A and/or second observer 102B.

The example of FIG. 1 is an elevator lobby 120 that includes multiple elevator access points 122A, 122B, 122C, 122D (generally, 122). Each of the elevator access points 122A, 122B, 122C, 122D can be associated with a set of elevator doors 124A, 124B, 124C, 124D. There may be various impediments for the observers 102 to travel between the location 106 proximate to the display device 104 and the desired end-point location 108, such as objects 128A, 128B. The objects 128A, 128B are examples of path movement constraints (e.g., walls, furniture, support columns, various structures, etc.) that limit the likely future position of the observers 102. Given that the desired end-point location 108 is one of the elevator access points 122 in FIG. 1, the objects 128A, 128B may limit the movement options of the observers 102, for instance, such that the observers 102 are most likely to pass between the objects 128A, 128B. The one or more sensors 112 can be used to determine a position and a trajectory 130 of the observers 102 by monitoring movement over a period of time.

Further examples of the sensors 112 can include one or more of a 2D red, green, blue (RGB) video camera and/or a depth sensor providing three-dimensional (3D) information that includes the distance and angle between the object and the depth sensor. Various 3D depth sensing technologies and devices that can be used include, but are not limited to, a structured light measurement, phase shift measurement, time of flight measurement, stereo triangulation device, sheet of light triangulation device, light field cameras, coded aperture cameras, computational imaging techniques, simultaneous localization and mapping (SLAM), imaging radar, imaging sonar, echolocation, laser radar, scanning light detection and ranging (LIDAR), flash LIDAR or a combination including at least one of the foregoing. Different technologies can include active (transmitting and receiving a signal) or passive (only receiving a signal) and may operate in a band of the electromagnetic or acoustic spectrum such as visual, infrared, ultrasonic, etc. In another embodiment, a floor pressure mat can detect the observer's position on the floor which can be used to, for example, compute the distance and orientation of the observer relative to the location of the display device 104. In various embodiments, a 3D depth sensor may be operable to produce 3D information from defocus, a focal stack of images or structure from motion. Similarly, a plurality of 2D depth sensors can be used to provide two-dimensional information that includes the distance between the object and the depth sensor.

A display adjustment system 114 can be incorporated into or operably coupled to the display device 104 and/or the one or more sensors 112 in a local, networked, or distributed configuration. The display adjustment system 114 can include a processing system 115, a memory system 116, and a device interface 118. The processing system 115 may be but is not limited to a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory system 116 may be a storage device such as, for example, a random access memory (RAM), read only memory (ROM), or other electronic, optical, magnetic or any other computer readable storage medium. The memory system 116 can include computer-executable instructions that, when executed by the processing system 115, cause the processing system 115 to perform operations as further described herein. The device interface 118 can include wired, wireless, and/or optical communication links to the display device 104 and the one or more sensors 112. Although only a single instance of the display adjustment system 114 is depicted in FIG. 1, it will be understood that there can be multiple instances of the display adjustment system 114 to support multiple instances of the display device 104 and the one or more sensors 112 or a single instance of the display adjustment system 114 can support multiple instances of the display device 104 and the one or more sensors 112.

The display adjustment system 114 is operable to capture data from the one or more sensors 112 and perform facial and/or body orientation detection. The facial and/or body orientation detection may use known image processing techniques to identify features of the observers 102. For instance, facial recognition performed by the display adjustment system 114 can track relative geometry of facial features such as eyes, mouth, nose, forehead, chin, and other features to both estimate the position (including orientation and/or gaze) of the observers 102 and also distinguish between multiple observers. The display adjustment system 114 is also operable to apply a distortion correction to display content based on the position and trajectory of the observers 102 relative to display device 104 to correct the display content with respect to the observers 102. For example, as the first observer 102A approaches and passes location 106, the angle of a line-of-sight of the first observer 102A changes relative to a display surface of the display device 104.

As depicted in the example of FIG. 1, at a point in time, the first observer 102A can be at a position with a distance D1 from the display device 104 while the second observer 102B can be at a position with a distance D2 from the display device 104. While distance D1 is less than distance D2, a first content screen associated with the first observer 102A can be displayed, such as directions to navigate to an assigned elevator access point 122, as one example of having a greater display priority. As the first observer 102A moves away from the display device 104 and the second observer 102B moves closer to the display device 104 such that distance D2 becomes less than distance D1, the display device 104 can switch from displaying a first content screen associated with the first observer 102A to accept input from the second observer 102B and display a second content screen associated with the second observer 102B. Similar examples of transitions can apply for changes in position, orientation, and/or gaze to determine whether the first observer 102A or the second observer 102B has the greater display priority. As another example, visibility of the display device 104 can impact priority. For example, if a display surface of the display device 104 is vertically oriented, an observer 102 who is behind the display device 104 may receive zero priority, even if the observer 102 is very close to the display device 104 and gazing at the back of the display device 104.

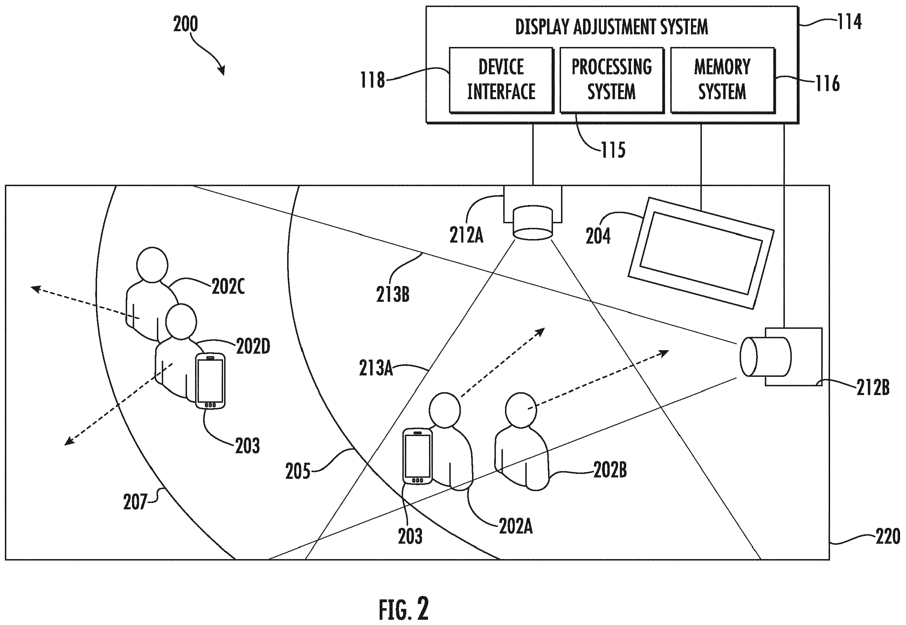

FIG. 2 depicts a configuration of system 200 as a variation of the system 100 of FIG. 1 for priority-based adjustment to display content. In the example of FIG. 2, the display adjustment system 114 interfaces to a display device 204 that is an embodiment of the display device 104 mounted in a corridor 220. Sensors 212A and 212B are embodiments of the one or more sensors 112 of FIG.1 mounted at different positions relative to the display device 204. For example, the sensors 212A, 212B can be positioned such that a field-of-view 213A of sensor 212A overlaps with a field-of-view 213B of sensor 212B. The overlapping of the field-of-view 213A, 213B can be used to better track the position and trajectory of observers 202 (A, B, C, D) and assist in confirming which observers 202 are most likely viewing the display device 204. For example, observers 202A, 202B may both be in close enough proximity to the display device 204 to interact with the display device 204 (within an interaction distance threshold 205), but observers 202C, 202D may transition to positions beyond a threshold distance 207 and be too far from the display device 204 to read the display content. The thresholds 205, 207 may provide a hysteresis band, where interactions can be initiated and display content may be maintained as observers 202 transition away from the display device 204. Alternatively, only a single threshold 205 may be used. In the example of FIG. 2, observers 202A, 202B are observed as having trajectories moving toward the display device 204 and may have variations in both position and trajectory, while observers 202C, 202D are moving further away from the display device 204.

Transitioning from an observer 202A to at least one or more additional observers 202B facing the display device 204 can be performed, for instance, based on one or more of: detecting a change in a number of observers 202A, 202B, and/or detecting a change in observer proximity/trajectory/orientation/gaze relative to the display device 204. The display device 204 may output an informational notice to indicate which of the observers 202A, 202B are currently being tracked for distortion correction.

In some embodiments, the display adjustment system 114 may interface with a mobile device 203 of one or more of the observers 202A-D to assist in determining position and/or trajectory. For example, an application loaded on the mobile devices 203 that is compatible with the display adjustment system 114 can assist the observers 202A-D with wayfinding through the display device 204, for instance, through a Wi-Fi or Bluetooth link between one or more mobile devices 203 and the display adjustment system 114. For instance, position and movement data captured by the mobile devices 203, e.g., through accelerometers, global positioning system data, and/or other sensors incorporated in the mobile devices 203 can be used to inform the display adjustment system 114 of observers' 202A-D trajectories. The observers 202A-D need not actively view the mobile devices 203 for display content; rather, the display content can be output on the display device 204, for instance, to assist in heads-up navigation through the corridor 220 with further instructions/directions provided on the display device 204 as a next turn or set of turns for the observers 202A, 202B to make. The position and/or movement data provided by the mobile devices 203 can assist the display adjustment system 114 in anticipating the approach of observers 202A-D prior to the observers 202A-D entering either or both of the field-of-view 213A, 213B.

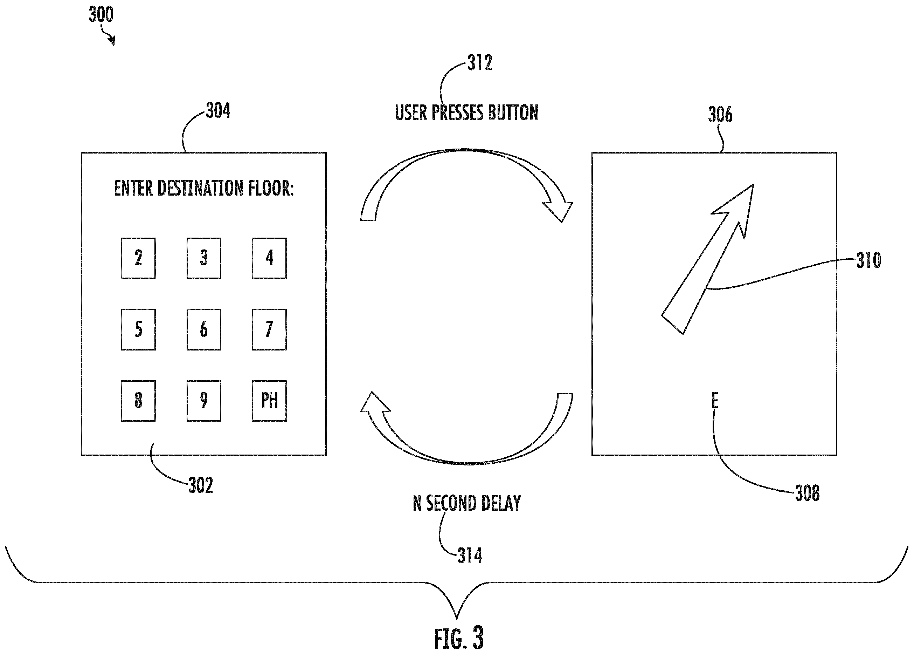

FIG. 3 depicts a display system 300 transitioning between a user input screen 302, such as an elevator destination floor selection interface 304, and observer-specific display content 306, which can include text 308 and trajectory graphics 310. The user input screen 302 and observer-specific display content 306 are examples of content that can be displayed on the display device 104 of FIG. 1. The display system 300 can transition from the user input screen 302 to the observer-specific display content 306 based on an observer selection 312 (e.g., a user presses a button). The display system 300 can transition from the observer-specific display content 306 to the user input screen 302 based on a timeout 314 or determining that a different one of a plurality of observers 102 has a greater display priority.

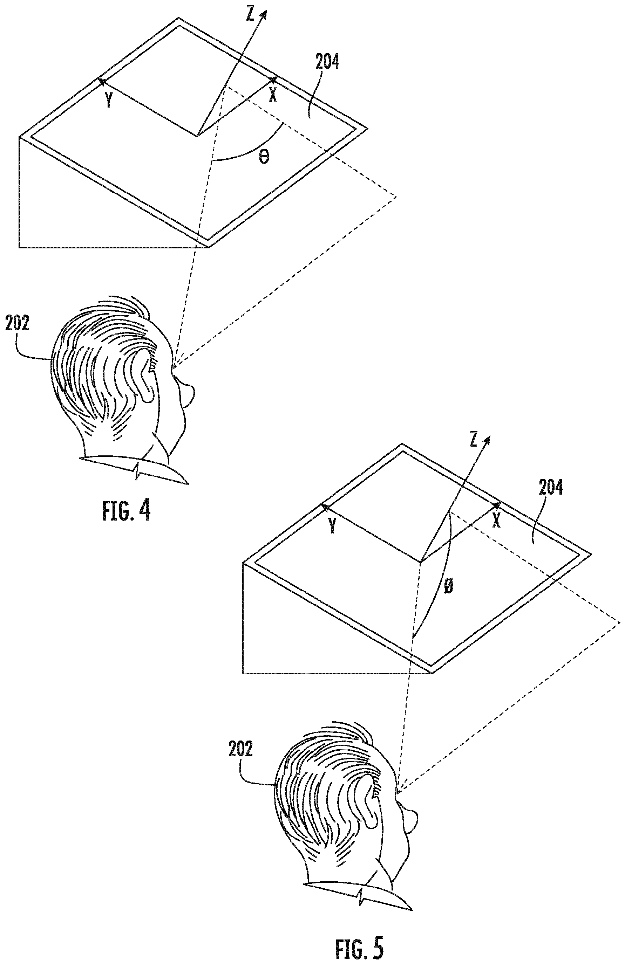

FIGS. 4 and 5 illustrate an example of an observer 202 relative to the display device 204 establishing a first observation angle ($\theta$) and a second observation angle ($\phi$). In embodiments using depth sensors, object positions may be initially calculated using a sensor-based coordinate system (u,v,d), where (u,v) is the horizontal and vertical position according to the sensor and d is the distance from the sensor. The (u,v,d) coordinates can be transformed to "world coordinates" based on a more useful frame of reference. For instance, a frame of reference can be defined with respect to the display device 204. Accordingly, a world coordinate system can include (x,y) coordinates as a horizontal and vertical position on the display device 204 and z as the direction facing away from the display device 204. The origin is located at the center of the display device 204. Alternatively, vectors or any other desired coordinate system can be used.

Any observer 202 that can see the front of the display device 204 is at a position where z > 0. Furthermore, if z > 0 and x = 0 and y = 0, then the observer 202 is directly in front of the display device 204 and no correction is needed. In the examples of FIGS. 4 and 5, z > 0, x < 0 (to the left side of the display device 204) and y < 0 (positioned closer to the bottom of the display device 204 than the top of the display device 204).

Accordingly, an example of a method for calculating distortion correction is as follows. There are two primary angles of interest: the first observation angle $\theta$ which is the angle of rotation with respect to the (x,y) orientation of the display device 204 and the second observation angle $\phi$ which is the obliqueness to the surface of the display device 204. Note that in the example of FIG. 4, $\theta$ depends only on the (x,y) coordinates and not on z. The computation of $\theta$ can be as follows:

$$\theta = \tan^{-1}(x/y) \text{ for } y < 0$$
$$= \tan^{-1}(x/y) + 180° \text{ for } y > 0$$
$$= 0 \text{ for } y = 0, x = 0$$
$$= 90° \text{ for } y = 0, x < 0$$
$$= -90° \text{ for } y = 0, x > 0.$$

The computation for $\phi$, as depicted in the example of FIG. 5, can be as follows:

$$\phi = \tan^{-1}(\text{sqrt}(x^2 + y^2)/z)$$

Once again for z > 0, when $\phi$ = 0, the observer 202 is directly in front of the display device 204; when $\phi$ is closer to 90°, the angle is quite oblique.

Given $\theta$ and $\phi$, visual content can be distorted to correct for the perspective of the observer 202 so that the display content appears undistorted to the observer 202. Consider that the position of the displayed content is represented in the (x,y) coordinates. For example, the letter "E" may include 4 line segments with the (x,y) coordinates. To transform the content defined by (x,y) into screen coordinates (p,q), an example transform is as follows:

$$p = \text{sqrt}((x \cos(\phi))^2 + y^2) \cos(\theta + \tan^{-1}(x / (y/\cos(\phi))))$$

$$q = \text{sqrt}((x \cos(\phi))^2 + y^2) \sin(\theta + \tan^{-1}(x / (y/\cos(\phi)))).$$

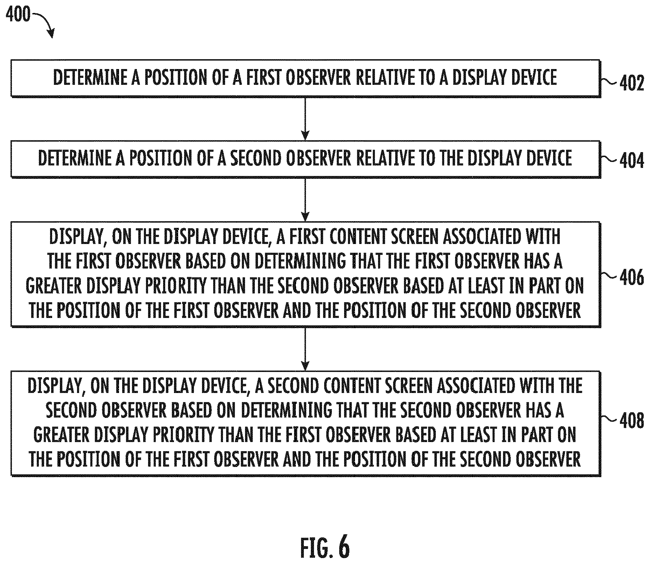

Referring now to FIG. 6 with continued reference to FIGS. 1-5, FIG. 6 depicts a flow chart of a method 400 of priority-based adjustment to display content in accordance with an embodiment of the disclosure. The method 400 can be performed, for example, by the display adjustment system 114 of FIGS. 1 and 2.

At block 402, the display adjustment system 114 can determine a position of a first observer 102A relative to a display device 104. At block 404, the display adjustment system 114 can determine a position of a second observer 102B relative to the display device 104. The first content screen can include a first elevator car assignment for the first observer 102A, and the second content screen can include a second elevator car assignment for the second observer 102B. Determining the position of the observers 102 relative to the display device 104 can include determining an angular difference between the observers 102 and a display surface of the display device 104.

At block 406, the display adjustment system 114 can display on the display device 104 a first content screen associated with the first observer 102A based on determining that the first observer 102A has a greater display priority than the second observer 102B based at least in part on the position of the first observer 102A and the position of the second observer 102B. At block 408, the display adjustment system 114 can display on the display device 104 a second content screen associated with the second observer 102B based on determining that the second observer 102B has a greater display priority than the first observer 102A based at least in part on the position of the first observer 102A and the position of the second observer 102B. To limit the impact of interruptions and movement of multiple people in a group, displaying the second content screen associated with the second observer 102B based on determining that the second observer 102B has a greater display priority than the first observer 102A can include confirming that the first observer 102A is outside of an interaction distance threshold 205 such that it is less likely that the first observer 102A is still gazing at the display device 104. The greater display priority can be determined, for example, based on one or more of: a distance relative to the display device 104, an orientation relative to the display device 104, a change in position relative to the display device 104, and a gaze relative to the display device 104.

The display adjustment system 114 can switch display content of the display device 104 to a user input screen 302 based on detecting a transition between the first observer 102A having the greater display priority than the second observer 102B. The display adjustment system 114 can switch display content of the display device 104 to a user input screen 302 based on reaching a timeout period after displaying the first content screen or the second content screen. The display adjustment system 114 can switch the display device 104 to a screen saver mode based on detecting no observers 102 within a threshold distance 207 of display device 104 for a screen saver timeout period.

Embodiments may distinguish the first observer 102A from the second observer 102B based on one or more of: a mobile credential, an observed physical characteristic, and facial recognition. Where the observers 102 are specifically identified, the display device 104 may avoid transitioning to the user input screen 302, as an existing floor preference of an identified observer 102 may be known. For instance, an association of displayed content can be based on detecting some aspect of the observer 102, such as a mobile credential (e.g., mobile device 203 emitting a unique address, a radio frequency identifier tag reading a badge, etc.), by recognizing the face of the observer 102 or a physical characteristic (e.g., age, gender, emotional state, etc.) of the observer 102. In such a case, there is only the second screen (e.g., the elevator assignment or wayfinding info) the display device 104 may display customized information to the observer 102 with the highest priority absent direct user input into the display device 104. For example, as people stream into a building, observers 102 can walk past the display device 104 that shows an elevator assignment, one at a time, without prompting the observers 102 to input a destination floor if the destination floor can be detected in another way (e.g., based on a default destination floor associated with a mobile credential or associated through other recognition). Therefore, as people walk past the display device 104, the display device 104 can provide information customized for the highest-priority observer 102 (e.g., a closest observer facing a display surface of the display device 104). As the first observer 102A moves past the display device 104 and a second observer 102B emerges as the highest priority, the display device 104 switches to show information customized for the second observer 102B.

The display adjustment system 114 may also track a position of an observer who most recently interacted with the display device 104 as a most recent observer, determine a distortion correction to apply based on the position of the most recent observer relative to the display device 104, and output the distortion correction to the display device 104. The display adjustment system 114 can adjust the distortion correction as the most recent observer continues to change position relative to the display device 104, where the distortion correction includes at least a rotation and rescaling operation. The display adjustment system 114 can determine the position of the most recent observer relative to the display device 104 based on one or more angular differences between the most recent observer and the display device 104.

While the above description has described the flow process of FIG. 6 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

**Claims**

1. A method of priority-based adjustment to display content, the method comprising:

    determining a position of a first observer relative to a display device;
    determining a position of a second observer relative to the display device;
    displaying, on the display device, a first content screen associated with the first observer based on determining that the first observer has a greater display priority than the second observer based at least in part on the position of the first observer and the position of the second observer; and
    displaying, on the display device, a second content screen associated with the second observer based on determining that the second observer has a greater display priority than the first observer based at least in part on the position of the first observer and the position of the second observer.

2. The method of claim 1, wherein the first content screen comprises a first elevator car assignment for the first observer and the second content screen comprises a second elevator car assignment for the second observer.

3. The method of claim 1 or 2, further comprising:
   switching display content of the display device to a user input screen based on detecting a transition between the first observer having the greater display priority than the second observer.

4. The method of any of claims 1 to 3, further comprising:
   switching display content of the display device to a user input screen based on reaching a timeout period after displaying the first content screen or the second content screen.

5. The method of any preceding claim, further comprising:
   switching the display device to a screen saver mode based on detecting no observers within a threshold distance of display device for a screen saver timeout period.

6. The method of any preceding claim, further comprising:

    tracking a position of an observer who most recently interacted with the display device as a most recent observer;
    determining a distortion correction to apply based on the position of the most recent observer relative to the display device; and
    outputting the distortion correction to the display device.

7. The method of claim 6, further comprising:

determining the position of the most recent observer relative to the display device based on one or more angular differences between the most recent observer and the display device; and

adjusting the distortion correction as the most recent observer continues to change position relative to the display device, wherein the distortion correction comprises at least a rotation and rescaling operation,

wherein the position is preferably determined based on one or more of: a depth sensor, a radar sensor, an ultrasonic sensor, a multi-camera system, an infrared sensor, and one or more floor pressure sensors.

8. The method of any preceding claim, further comprising:
distinguishing the first observer from the second observer based on one or more of: a mobile credential, an observed physical characteristic, and facial recognition.

9. The method of any preceding claim, wherein the greater display priority is determined based on one or more of: a distance relative to the display device, an orientation relative to the display device, a change in position relative to the display device, and a gaze relative to the display device.

10. A system, comprising:

a display device;
one or more sensors operable to detect a position of an observer; and
a display adjustment system operably coupled to the display device and the one or more sensors, the display adjustment system configured to perform a plurality of operations comprising:

determining a position of a first observer relative to the display device;
determining a position of a second observer relative to the display device;
displaying, on the display device, a first content screen associated with the first observer based on determining that the first observer has a greater display priority than the second observer based at least in part on the position of the first observer and the position of the second observer; and
displaying, on the display device, a second content screen associated with the second observer based on determining that the second observer has a greater display priority than the first observer based at least in part on the position of the first observer and the position of the second observer.

11. The system of claim 10, wherein the first content screen comprises a first elevator car assignment for the first observer and the second content screen comprises a second elevator car assignment for the second observer.

12. The system of claim 10 or 11, wherein the system is further configured to perform one or more of the following the operations:

switching display content of the display device to a user input screen based on detecting a transition between the first observer having the greater display priority than the second observer,
switching display content of the display device to a user input screen based on reaching a timeout period after displaying the first content screen or the second content screen, and
switching the display device to a screen saver mode based on detecting no observers within a threshold distance of display device for a screen saver timeout period.

13. The system of any of claims 10 to 12, wherein the system is further configured to perform the operations comprising:

tracking a position of an observer who most recently interacted with the display device as a most recent observer;
determining a distortion correction to apply based on the position of the most recent observer relative to the display device; and
outputting the distortion correction to the display device.

14. The system of claim 13, wherein the system is further configured to perform the operations comprising:

determining the position of the most recent observer relative to the display device based on one or more angular differences between the most recent observer and the display device;
adjusting the distortion correction as the most recent observer continues to change position relative to the display device, wherein the distortion correction comprises at least a rotation and rescaling operation,
wherein the position is preferably determined based on one or more of: a depth sensor, a radar sensor, an ultrasonic sensor, a multi-camera system, an infrared sensor, and one or more floor pressure sensors.

15. The system of any of claims 10 to 14, wherein the system is further configured to distinguish the first observer from the second observer based on one or more of: a mobile credential, an observed physical characteristic, and facial recognition, and/or,
wherein the greater display priority is determined based on one or more of: a distance relative to the display device, an orientation relative to the display device, a change in position relative to the display device, and a gaze relative to the display device.

FIG. 1

FIG. 2

**FIG. 3**

FIG. 4

FIG. 5

400

| DETERMINE A POSITION OF A FIRST OBSERVER RELATIVE TO A DISPLAY DEVICE | ~402 |

| DETERMINE A POSITION OF A SECOND OBSERVER RELATIVE TO THE DISPLAY DEVICE | ~404 |

| DISPLAY, ON THE DISPLAY DEVICE, A FIRST CONTENT SCREEN ASSOCIATED WITH THE FIRST OBSERVER BASED ON DETERMINING THAT THE FIRST OBSERVER HAS A GREATER DISPLAY PRIORITY THAN THE SECOND OBSERVER BASED AT LEAST IN PART ON THE POSITION OF THE FIRST OBSERVER AND THE POSITION OF THE SECOND OBSERVER | ~406 |

| DISPLAY, ON THE DISPLAY DEVICE, A SECOND CONTENT SCREEN ASSOCIATED WITH THE SECOND OBSERVER BASED ON DETERMINING THAT THE SECOND OBSERVER HAS A GREATER DISPLAY PRIORITY THAN THE FIRST OBSERVER BASED AT LEAST IN PART ON THE POSITION OF THE FIRST OBSERVER AND THE POSITION OF THE SECOND OBSERVER | ~408 |

FIG. 6